# EUROPEAN PATENT SPECIFICATION

(11) **EP 2 300 595 B1**
(45) Date of publication and mention of the grant of the patent: **05.07.2017**
(21) Application number: 09793727.0
(22) Date of filing: 08.07.2009
(51) Int. Cl.: A01K 61/17

(54) **INCUBATOR DEVICE AND CULTIVATION PROCESS FOR FISH AND OTHER NON-HUMAN ANIMALS**
INKUBATORVORRICHTUNG UND KULTIVIERUNGSVERFAHREN FÜR FISCHE UND ANDERE NICHT-MENSCHLICHE TIERE
DISPOSITIF INCUBATEUR ET PROCÉDÉ D'ÉLEVAGE POUR LE POISSON ET AUTRES ANIMAUX NON HUMAINS

(30) Priority: 08.07.2008 BR PI0802399
(43) Date of publication of application: 30.03.2011
(73) Proprietor: União Brasileira De Educação E Assistência - Mantenedora Da Pucrs, CEP: 90670-020 Porto Alegre - RS (BR)
(72) Inventor: GUIMARÃES DE AZEVEDO, Dario Francisco, Cep: 94450-000 Viamão - RS (BR); RUSSOMANO, Thais, Cep: 90035-03 Porto Alegre - RS (BR)
(74) Representative: Pulieri, Gianluca Antonio
(86) International application number: PCT/BR2009/000201
(87) International publication number: WO 2010/003207

(56) References cited:
- EP-A1- 1 577 380
- EP-A1- 1 661 979
- WO-A1-2007/076865
- WO-A2-01/23595
- JP-A- 2002 045 173
- JP-A- 2007 068 447
- US-A- 5 823 143
- US-A1- 2003 041 800
- US-A1- 2003 064 513
- US-A1- 2006 019 388
- RUSSOMANO ET AL: "Development and Validation of a 3D Clinostat for the Study of Cells during Microgravity Simulation", ENGINEERING IN MEDICINE AND BIOLOGY SOCIETY, 2005. IEEE-EMBS 2005. 27T H ANNUAL INTERNATIONAL CONFERENCE OF THE SHANGHAI, CHINA 01-04 SEPT. 2005, PISCATAWAY, NJ, USA,IEEE, 1 September 2005 (2005-09-01), - 4 September 2005 (2005-09-04), pages 564-566, XP031000977, DOI: 10.1109/IEMBS.2005.1616474 ISBN: 978-0-7803-8741-6

## Description

### Field of Invention

The invention herein relates to the creation of conditions that simulate microgravity in modulation of the development of fertilized eggs of animals and of ova, alevins and/or fish and other non-human test specimens. The following are understood as being non-human test specimens: embryonic cells, fish larvae, alevins, animal eggs (fertilized) and foetuses. More specifically, the invention herein provides a device and process capable of inducing the effects caused by the cancellation of the gravitational acceleration vectors, thereby simulating microgravity and/or due to the minimisation of the magnetic field; the same is applied preferentially to fish ova and other non-human test specimens during the different stages in which cell division occurs. The process used in order to simulate an environment with cancellation of the gravitational acceleration vectors and the magnetic field in fish ova and other non-human test specimens has the following principal advantages: (1) accelerated development with regards growth; and (2) a low mortality rate, without bringing about damaging results to the species. The growth rate (volume and mass) of fish and other non-human animals obtained by the process of the present invention is significantly greater, during the same period, when compared to the same in an environment with normal gravity.

### Background to Invention

It is known that gravity and the magnetic field of the Earth interfere with the development of certain organisms. The experiment which most closely resembles the concept of the present invention was performed on the 22^{nd} of January, 1992, during the STS-50 mission on board the space craft *Discovery,* during which chicken eggs were incubated until hatching. As part of this mission, a microgravity laboratory (IML-1), a manned pressurised Spacelab module, was taken into space in order to explore the extent of the complex effects from the absence of weight on living organisms and on the processing of materials. The groups of researchers also carried out experiments as part of the study for adaptation of the human nervous system to low gravity and under the influence of microgravity, based on models in other living forms, such as lentil seeds, fly eggs and bacteria. Other experiments regarding material processing in low gravity included the growth of crystals using a series of substances such as enzymes, mercury iodide and a virus. The results obtained from the studies on samples of chicken eggs demonstrated that individual eggs had a high growth rate without deformities. However, a large part of the egg samples did not even hatch. Another study, published in 2005 (Proceedings of the 2005 IEEE Engineering in Medicine and Biology 27th annual Conference, Shanghai, China: A Preliminary Biophysical Report on the Fertilized Eggs Traveled with Spaceflight), demonstrated that chicken eggs, which travelled in spacecrafts and were submitted to the condition and absence of gravity, experienced increased productivity. However, the costs and risks of sending biological matter in large quantities to space are still prohibitive, this being the reason of the search for devices which reproduce at least partially the conditions obtained in outer space.

The clinostat is a device designed to cause spatial disorientation and it was used, at the beginning of the last century, to study the reason the roots of plants grow towards the centre of the Earth. The principle of how it works is based on multiple rotations in such a way as to bring about gravitational disorientation. Normally, clinostats rotate on only one axis, known as 2D. Modern ones, however, rotate on two axes and are known as 3D clinostats. The physical reasons for the effects of clinostats have been partially known since the beginning of the 1970s. However, new developments relating to said devices - and principally regarding its new applications - arise in present times. Current scientific knowledge encompasses various publications relating to the field of microgravity. However, none of the documents found reveals or even suggest any of the objects of the present invention.

Scientific findings include studies relating to the use of devices which alter the gravitational acceleration vector in the development of fish. Studies carried out by the University of Stuttgart-Hohenheim, in Germany, demonstrate that the development of certain fish organs is influenced by hypergravity conditions and that the use of clinostats can at least in part offset the harmful effects of hypergravity. Various other studies, such as those listed below, report the use of clinostat in fish and other animals. Also listed are the evaluation of the results in passages.
- Biol Sci Space. 2003 Oct;17(3):165-6
   The effect of clinorotation on vestibular compensation in upside-down swimming catfish.
- J Gravit Physiol. 2000 Jul;7(2):P97-8.
   Unique postural control of upside-down swimming catfish, *Synodontis nigriventris,* not affected by the change of gravity.
- Adv Space Res. 1999;23(12):2045-8.
   Retinal photoreceptor and related gene expression in normal and clinostat-treated fish embryos.
- Adv Space Res. 2000;25(10):1985-95.
   Gravitational neurobiology of fish.
- Adv Space Res. 1998;22(2):255-64.
   Neuroplastic reactivity of fish induced by altered gravity conditions: a review of recent results.
- Naturwissenschaften. 1999 Apr;86(4):155-67.
   Effect of altered gravity on the neurobiology of fish.
- Brain Res Rev. 1998 Nov;28(1-2):9-18.
   Neurobiology of fish under altered gravity conditions.
- Adv Space Res. 1996;17(6-7):285-8.
   Influence of altered gravity on the cytochemical localization of cytochrome oxidase activity in central and peripheral gravisensory systems in developing cichlid fish.
- Adv Space Res. 1996;17(6-7):275-9.
   Early development in aquatic vertebrates in near weightlessness during the D-2 Mission STATEX project.
- Neurochem Int. 1995 Jun;26(6):579-85.
   Development and altered gravity dependent changes in glucose-6-phosphate dehydrogenase activity in the brain of the cichlid fish *Oreochromis mossambicus.*
- Acta Astronaut. 1988 Feb;17(2):257-62.
   The response of structure and function of the gravireceptor in a vertebrate to near weightlessness.

However, none of the previous scientific publications or existing patents mentions the use of clinostats for the incubation of non-human test specimens as set out in the present invention, with the goal of future industrial farming of said test specimens. Nor is there any suggestion, even indirect, regarding the various advantages of the process relating to the invention herein in the large scale farming of fish and other non-human edible animals.

JP patent application 2007 068447 A, assigned to Univ. Hiroshima, Mitsubishi Heavy Ind. Ltd., discloses a device (2) for the incubation of fish and other non-human animals under simulated effects of microgravity comprising:
- four cylindrical or spherical receptacles, fixed to a first rotation axis (23a), in order to house fish and other non-human animals;
- a second rotation axis (25a), perpendicular to the first rotation axis;
- means for providing the rotation of said receptacles (1) about said axes (23a, 25a); and
- an electronic system for controlling the rotating movement of said receptacles (1) about said axes (23a, 25a);
wherein each said cylindrical or spherical receptacle (1) comprises access ports (11 b) at its ends that are suitable for the removal or collection of samples, even when said receptacle is in movement.

US patent application 2003/064513A1 assigned to Uemura Masaru et al., discloses a device (10, 50) comprising for receptacles (60) fixed to a first rotating axis (4a), a second rotating axis (6a), means for providing rotation and an electronic system.

US patent 3,882,634, assigned to NASA, describes a device which accelerates the growth of plants as a result of the application of rotation and translation movements on the horizontal axes, with means being provided for nutrients to be administered to said plants during the rotational movements. Horizontal planetary movement reduces the effects of gravity, thereby accelerating the growth of plants.

US patent 3,911,619, assigned to Gravi-Mechanics Co., describes a device for germination of seeds, which also involves the application of rotational movements on the horizontal axes. Horizontal planetary movement reduces the effects of gravity, thereby accelerating the germination of seeds and avoiding certain problems associated with gravity.

US patent 3,973,353, assigned to Gravi-Mechanics Co., describes a another device which accelerates the growth of plants by applying rotation and translation movements on the horizontal axes, with means being provided for nutrients to be administered to said plants during the rotational movements. Horizontal planetary movement reduces the effect of gravity, thereby accelerating the growth of plants.

US patent, 4,988,623, assigned to NASA, describes a bioreactor for cellular culture which applies rotational movements on the horizontal axes, with means being provided for nutrients to be administered to said cells during the rotational movements. Different devices for the control of nutrient flow are provided, as well as means for aerating said nutrients and temperature control mechanisms.

US patent 5,155,034, assigned to NASA, describes an use of the bioreactor described in US patent 4,988,623, claiming to be a method for the culture and growth of cellular tissue in mammals, under low shear conditions.

International patent application, WO 01/23595, filed by the University of Toledo (US), describes a method of genetic transformation in animal or vegetable cells, by contacting said cells with mutagenic chemical agents, or other compositions containing organisms or ingredients capable of genetic transformations, in a microgravity environment created by a clinostat. The ability of cells to undergo gene transformation by way of said agents is augmented due to the microgravity environment. Furthermore, the document reports that the production of a heterologous gene product is increased by a microgravity environment.

US patent 6,726,765, assigned to Mitsubishi Heavy Industries Ltd., describes a device which crystallizes proteins in a microgavity environment. Said device applies rotational movements to the two perpendicular axes between themselves. The document reports that the crystallisation of proteins under the conditions created by the device brings about the growth of isotropic protein crystals.

US patent application 2005/208650, filed by the same Japanese inventor who owns US patent 6,726,765, describes the method for the culture and growth of cells or organisms in a clinostat provided with means for supplying nutrients to said cells or organisms.

The results obtained with the device and process of the present invention are surprising in light of scientific publications and known patents. The considerable advantages and beneficial outcomes of the invention provide an alternative for the production of more food products in the world. Due to the problems caused by bird flu recently, in the short term this process could be an alternative for the consumption of chicken meat.

### Summary of Invention

One of the objectives of the invention herein is to provide a device which simulates an environment without gravity and/or a magnetic field, for the incubation of fish and other non-human animals.

Another objective of the invention herein is to provide a process for the large scale farming of fish and other non-human animals. The process according to the invention as defined in claim 3 is comprised of at least one step involving incubation of fish and other non-human animals in a device according to the invention as defined in claim 1 which simulates an environment without gravity and/or magnetic field.

Another further objective of the invention herein is to provide a process for the large scale farming of fish and other non-human animals, which undergo accelerated growth.

Another objective of the invention herein is to provide a process for the large scale farming of fish and other non-human animals, which experience a low mortality rate, without any harmful effects being induced.

Another objective of the invention herein is to provide a process for the large scale farming of fish and other non-human animals, which experience a significantly higher growth rate (volume and mass), in the same time frame, when compared to others in an environment with normal gravity.

The abovementioned and other objectives of the present invention will become more apparent from the detailed description of the invention and the attached claims.

### Short Description of the Figures

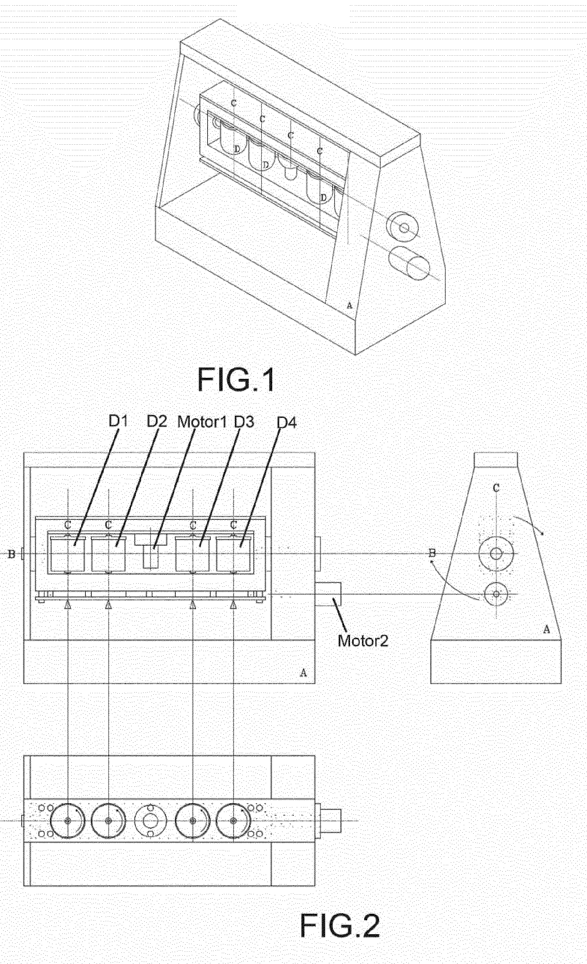

Figure 1 displays a schematic diagram of the present invention from a 3D perspective, in which: D represents a receptacle with a cylindrical shape in which the biological material is contained.
Figure 2 displays a schematic diagram of the device in Figure 1 from 3 technical angles, in which: A represents the base; B represents the rotating axis, C represents another rotating axis, D represents a cylindrical receptacle in which the biological material is contained (four in total: D1, D2, D3 and D4). Motor 1 and Motor 2 are also indicated.

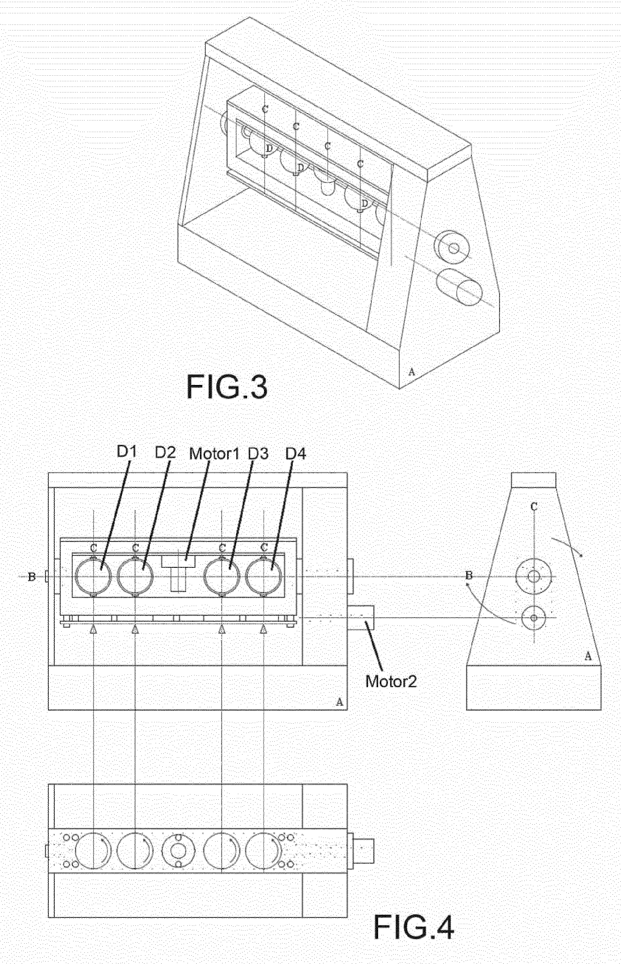

Figure 3 displays a schematic diagram of another version of invented device herein, from a 3D perspective, in which: D represents a spherical receptacle where the biological material is contained.
Figure 4 displays a schematic diagram of the machine in figure 1 from 3 technical angles, in which: A represents the base; B represents the rotating axis, C represents another rotating axis, D represents a spherical receptacle in which the biological material is contained (four in total: D1, D2, D3 and D4). Motor 1 and Motor 2 are also indicated

### Detailed Description of the Invention

For the purposes of the invention herein, the term "fish and other non-human animals" includes fish and other young and adult animals, as wells as their alevins, ovaries, (fertilized) eggs and other non-human test specimens. The invention herein provides a clinostat adapted for the incubation of the fish ova, (fertilized) eggs and other non-human test specimens and a process for the large scale farming of fish and other non-human animals by way of the application of microgravity. Submitting fertilized fish ova, (fertilized) eggs from animals and other non-human test specimens to a simulated environment characterised by microgravity and/or minimisation of the magnetic field is an innovative process. No other publications or reports were found on experiments related to the present invention.

The device of the present invention is capable of stimulating the development (growth/time) in fish species and other non-human animals and it represents an enhancement and adaptation of another older device, known as the "clinostat". In reference to the preferred version of the invented device herein, which was conceived, designed and developed by the Microgravity Centre of the Faculty of Engineering for the Catholic University of Rio Grande do Sul (PUCRS), the clinostat possesses two rotating axes (3D clinostat). Its structure was conceived as a modular piece divided in 3 principal parts: base, rotating framework and receptacles (cylinders or spheres). The base was designed in waterproof material. The structure of the rotating framework is rectangular in shape and it was designed with rigid tubes. The receptacles hold the non-human test specimens. Each receptacle possesses quick release couplings at its ends for removal or collection of samples, even when in movement. The rotational movements of the device are obtained by way of two motors, each joined to a mechanical assembly with reduction. These two motors are responsible for rotating the vertical and horizontal axes. The rotating movements of the device are controlled by way of an electronic system which feeds the motors. The rotation controller can independently adjust the rotational speed of the receptacles (containing the non-human test specimens), on the vertical and horizontal axes.

The process of the present invention comprises at least one step of incubating fish ova and other non-human animals in a 3D clinostat. After several periods of incubation subject to rotations that can last from a few minutes to a few days, the samples are removed from the clinostat. The incubation step has the purpose of inducing accelerated growth after the hatching and development of ova in fish and other non-human animals.

Although the mechanisms by which increased and surprising growth occurs are unknown; it is believed that the process is a result of a reduction of the effects caused by the acceleration of gravity (that is, the simulation of microgravity) and/or by Earth's magnetic field. The device of the present invention induces these effects in fish larvae, (fertilized) animal eggs and other non-human test specimens in a normal environment on land. In the process of the present invention, a microgravity environment is simulated by the use of a receptacle with non-human test specimens placed under a rotating mechanism, in order to, by way of rotation of the horizontal and vertical axes, randomly accelerate the cells in such a way as to reduce the resulting gravitational vector. In a preferred embodiment, the test receptacle is comprised of four cylindrical and spherical containers. In a preferred embodiment, said containers can hold at the same time four groups of fish ova (100 thousand ova in each group) or other non-human test specimens. In an embodiment of the process herein disclosed, fertilized fish ova species, *Tilapia Nilotica,* were subjected to conditions of simulated microgravity. Four sample groups were incubated in the device of the present invention for different time periods.

The device and process of the present invention advantageously provide the fertilisation and farming of fish larvae and foetuses/larvae of other non-human animals in a normal earthly environment. The process used in order to simulate an environment with a reduction of the gravitational acceleration vector and/or the magnetic field in fish ova and other non-human test specimens has the following main advantages: (1) accelerated development in terms of growth in the species undergoing the process; (2) a low mortality rate; (3) greater resistance in animals to aggressive external factors (diseases and climatic variations); and (4) the absence of harmful effects on the species (physiological differences were not found in the group of individuals subjected to the equipment in relation to a scientific control).

Specialists in the art of large scale farming of fish and other non-human animals will immediately value the findings described herein and will understand the several technical, economic, environmental and sanitary advantages of the technology described herein. Small variations of the invention described herein should be understood within the scope of the claims.

## Claims

1. Device for incubation of fish and other non-human animals under simulated effects of microgravity, comprising:
- four cylindrical or spherical receptacles (D1, D2, D3 and D4), fixed to a first rotating axis (B), in order to house fish or other non-human animals;
- a second rotating axis (C), associated with each of said receptacles that are placed along said first rotating axis (B), said second rotating axis (C) being perpendicular to said first rotating axis (B), wherein said second rotating axis (C) of each receptacle is parallel to and distinct from said second rotating axis (C) of every other receptacle;
- a motor (1);
- a further motor (2);
and
- an electronic system for controlling the rotating movement of said axes;
**characterized in that**
each receptacle (D1, D2, D3 and D4) rotates about its said second rotating axis (C);
wherein rotation of all receptacles (D1, D2, D3 and D4) rotating about its said second rotating axis (C) is provided by said motor (1) which is disposed in a parallel position with each receptacle (D1, D2, D3 and D4);
wherein said motor (1) and further motor (2) are angularly spaced apart by about 90° about a center line that intersects perpendicularly an axis of rotation of each of said motor (1) and further motor (2); and
wherein each of said cylindrical or spherical receptacles (D1, D2, D3 and D4) comprises quick release couplings at its ends for the removal or collection of samples, even when said receptacles are in movement.

2. Device according to claim 1, wherein the system for controlling the rotating movement of said axes independently adjusts the rotational speed of the receptacles (D1, D2, D3 and D4) about the first and second axe.

3. Process for farming of fish and other non-human animals **characterized by** the step of:
- including at least one step involving the incubation of fish or other non-human animals in a device defined in claim 1.

4. Process according to claim 3, wherein said fish or other non-human animals are fish, young adult animals, alevins, ovaries, fertilized eggs, test specimens and fish ova.

5. Process according to claim 4 wherein said fish or other non-human animals is fish or fish ova.

6. Process, according to claim 3, wherein said fish and other non-human animals are at a stage in which the ova/eggs are fertilized.

## Patentansprüche

1. Vorrichtung zur Inkubation von Fischen und anderen nicht-menschlichen Tieren unter simulierten Mikroschwerkraftwirkungen, die umfasst:
- vier zylindrische oder kugelförmige Gefäße (D1, D2, D3 und D4), die an einer ersten Drehachse (B) befestigt sind, um Fische oder andere nicht-menschliche Tiere aufzunehmen;
- eine zweite Drehachse (C), die mit jedem der Gefäße verbunden ist, die entlang der ersten Drehachse (B) angeordnet sind, wobei die zweite Drehachse (C) senkrecht zu der ersten Drehachse (B) ist, wobei die zweite Drehachse (C) jedes Gefäßes parallel und entfernt von der zweiten Drehachse (C) jedes anderen Gefäßes ist;
- einen Motor (1);
- einen weiteren Motor (2);
und
- ein elektronisches System zur Steuerung der Drehbewegung der Achsen;
**dadurch gekennzeichnet, dass**
jedes Gefäß (D1, D2, D3 und D4) sich um seine zweite Drehachse (C) dreht;
wobei die Drehung aller Gefäße (D1, D2, D3 und D4), die sich um ihre zweite Drehachse (C) drehen, durch den Motor (1) bereitgestellt wird, der in einer zu jedem Gefäß (D1, D2, D3 und D4) parallelen Position eingerichtet ist;
wobei der Motor (1) und der weitere Motor (2) winkelig um etwa 90° um eine Mittellinie, die eine Drehachse jedes des Motors (1) und des weiteren Motors (2) senkrecht schneidet, beabstandet sind; und
wobei jedes der zylindrischen oder kugelförmigen Gefäße (D1, D2, D3 und D4) Schnellentriegelungskopplungen an seinen Enden für die Entfernung oder Sammlung von Proben, selbst wenn die Gefäße in Bewegung sind, umfasst.

2. Vorrichtung nach Anspruch 1, wobei das System zur Steuerung der Drehbewegung der Achsen die Drehgeschwindigkeit der Gefäße (D1, D2, D3 und D4) um die ersten und zweiten Achsen unabhängig einstellt.

3. Verfahren zur Zucht von Fischen und anderen nicht-menschlichen Tieren,
**gekennzeichnet durch** den folgenden Schritt:
- Aufnehmen wenigstens eines Schritts, der die Inkubation von Fischen oder anderen nicht-menschlichen Tieren in einer in Anspruch 1 definierten Vorrichtung bedingt.

4. Verfahren nach Anspruch 3, wobei der Fisch oder andere nicht-menschliche Tiere Fische, heranwachsende Tiere, Dottersacklarven, Eierstöcke, befruchtete Eier, Testproben und Fischeizellen sind.

5. Verfahren nach Anspruch 4, wobei die Fische oder anderen nicht-menschlichen Tiere Fische oder Fischeizellen sind.

6. Verfahren nach Anspruch 3, wobei die Fische und anderen nicht-menschlichen Tiere in einem Stadium sind, in dem die Fischeizellen/Eier befruchtet sind.

## Revendications

1. Dispositif d'incubation de poissons et autres animaux non humains sous des effets simulés de microgravité, comprenant :
- quatre réceptacles cylindriques ou sphériques (D1, D2, D3 et D4), fixés à un premier axe de rotation (B), afin de loger des poissons et autres animaux non humains ;
- un second axe de rotation (C), associé à chacun desdits réceptacles qui sont placés le long dudit premier axe de rotation (B), ledit second axe de rotation (C) étant perpendiculaire audit premier axe de rotation (B), dans lequel ledit second axe de rotation (C) de chaque réceptacle est parallèle à et distinct dudit second axe de rotation (C) de chaque autre réceptacle ;
- un moteur (1) ;
- un moteur supplémentaire (2) ;
et
- un système électronique pour commander le mouvement rotatif desdits axes ;
**caractérisé en ce que**
chaque réceptacle (D1, D2, D3 et D4) tourne autour de son dit second axe de rotation (C) ;
dans lequel une rotation de tous les réceptacles (D1, D2, D3 et D4) tournant autour de leur dit second axe de rotation (C) est assurée par ledit moteur (1) qui est disposé dans une position parallèle à chaque réceptacle (D1, D2, D3 et D4) ;
dans lequel lesdits moteur (1) et moteur supplémentaire (2) sont espacés angulairement d'environ 90° autour d'une ligne centrale qui coupe perpendiculairement un axe de rotation de chacun desdits moteur (1) et moteur supplémentaire (2) ; et dans lequel chacun desdits réceptacles cylindriques ou sphériques (D1, D2, D3 et D4) comprend des raccords à dégagement rapide au niveau de ses extrémités pour le retrait ou le recueil d'échantillons, même lorsque lesdits réceptacles sont en mouvement.

2. Dispositif selon la revendication 1, dans lequel le système pour commander le mouvement rotatif desdits axes ajuste indépendamment la vitesse de rotation des réceptacles (D1, D2, D3 et D4) autour des premier et second axes.

3. Procédé d'élevage de poissons et autres animaux non humains **caractérisé par** l'étape :
- d'inclusion d'au moins une étape impliquant l'incubation de poissons et autres animaux non humains dans un dispositif défini à la revendication 1.

4. Procédé selon la revendication 3, dans lequel lesdits poissons ou autres animaux non humains sont des poissons, des jeunes animaux adultes, des alevins, des ovaires, des oeufs fertilisés, des spécimens d'essai et des ovules de poissons.

5. Procédé selon la revendication 4, dans lequel lesdits poissons ou autres animaux non humains sont des poissons ou des ovules de poissons.

6. Procédé, selon la revendication 3, dans lequel lesdits poissons et autres animaux non humains sont à un stade auquel les ovules/oeufs sont fertilisés.
